# EUROPÄISCHE PATENTANMELDUNG

(11) **EP 2 719 671 A1**
(43) Veröffentlichungstag der Anmeldung: **16.04.2014**
(21) Anmeldenummer: 12188557.8
(22) Anmeldetag: 15.10.2012
(51) Int. Cl.: C03C 17/00

(54) **Beschichetes Glas**

(71) Anmelder: Glashandelsgesellschaft Profi mbH, 92706 Luhe-Wildenau (DE)
(72) Erfinder: Plödt, Hans, 92685 Floß (DE); Interwies, Jan, 84028 Landshut (DE); Günther, Jochen, 33824 Werther/Westfalen (DE)
(74) Vertreter: May, Mark Andrew

(57) **Zusammenfassung**

Gegenstand der Erfindung ist ein beschichtetes Glas, erhältlich durch Aufbringen von SiO₂- und/oder Kieselsäurenanopartikeln, die eine äusseren Schicht aus Polysiloxanen aufweisen, auf die Glasoberfläche, wobei die organischen Reste der Polysiloxane nach dem Aufbringen durch Erwärmen entfernt werden.

## Beschreibung

Die vorliegende Erfindung betrifft gehärtetes Glas, eine Lösung oder Suspension zum Härten von Glas sowie ein Verfahren zum Härten von Glas.

### Technischer Hintergrund

Glas ist ein weit verbreiteter Werkstoff, der in den unterschiedlichsten Bereichen eingesetzt wird und in den meisten Fällen gehärtet werden muss um den technischen, praktischen und gesetzlichen Forderungen zu entsprechen.

Beispiele für Einsatzbereiche von Glas sind beispielsweise Automobilglas, z.B. für Front- und Seitenscheiben, Dachgläser, Rückspiegel, Instrumentenabdeckungen und dergleichen, Architekturglas, z.B. für Fassadenverglasungen, Dachkonstruktionen, Fenster, Türen, Wintergärten, Duschkabinen, Waschtische, Treppen, Glasfußböden, Trennwandsysteme, Spiegel, Beleuchtungssysteme und dergleichen, Geräteglas, z.B. Blenden für Mikrowellen, Herde und Herdflächen, Gläser für Kopier- und Faxgeräte, Displaygläser für Computer, Tablet-Computer und Mobiltelefone, Einlegeböden und dergleichen, Hohlglas, z.B. für Isoliergefäße, Behälterglas, Wirtschaftsglas, Beleuchtungsglas, Bauhohlglas, Glasrohre, Laborglas, medizinisch-technisches Hohlglas und dergleichen, Möbelglas, z.B. für Einlegeböden, Türen, Sanitärschränke aus Spiegelglas, Möbelfronten, Arbeitsplatten und dergleichen, optisches Glas, z.B. für Linsen, Prismen Spiegel und dergleichen, sowie Spezialglas, z.B. für medizinisch-technisches Flachglas wie Objektträger und Deckgläser für die Mikroskopie, Schaugläser, Glas für Fotovoltaik- und Fotothermie-Anlagen, Brandschutzglas und dergleichen.

Glas muss für praktisch jede Anwendung in irgendeiner Weise bearbeitet werden, wobei, je nach Art der Bearbeitung, an der Oberfläche Verletzungen auftreten, die die Festigkeit des Glases herabsetzten und im ungünstigsten Fall zum Brechen, d.h. zur Zerstörung, führen.

Bearbeiten von Glas, wie z.B. Schneiden, Bohren, Sandstrahlen, Schleifen, Wasserstrahlschneiden, Ätzen, Gravieren, Fräsen, Brechen, Lasern, um nur einige zu nennen, haben mikroskopisch kleine Risse, Fehlstellen, Abplatzungen, Gefügeschäden, Mikroeinläufe, Anstossstellen, Druckstellen, Kratzer und ähnliche Verletzungen zur Folge.

Dies ist auch der Grund dafür, dass die praktische, am Werkstück gemessene Zugfestigkeit von Glas etwa um den Faktor 100 niedriger als der theoretische Festigkeitswert ist.

Die eigentliche Zerstörung einen Glasscheibe durch Bruchbildung geht in der Praxis immer von einem kleinen mechanischen Defekt, einer wie oben beschriebenen Verletzung oder Anriss aus.

Am Ort eines bruchauslösenden Oberflächenfehlers oder einer "Verletzung" vorliegende Spannungen, können durch äußere mechanische Belastungen wie z.B. Verwindung, Windlast, Stoßbelastung oder auch thermische Belastungen wie z.B. Kühlrestspannung sowie thermische Spannungen durch Kühlung oder Aufheizung verursacht sein.

Besonders gefährlich ist in diesem Zusammenhang der Mechanismus eines unterkritischen Risswachstums. Erreicht ein Riss im Laufe der Zeit die für die Spannung kritische Länge, dann tritt spontaner Bruch ein. Das Glaswerkstück bricht also erst nach einen gewissen Belastungszeit. Solche verzögerten Erscheinungen bezeichnet man auch als Ermüdung.

Je nach Produktionsgeschichte, von der Glasherstellung über die Lagerung und den Transport, bis zur Veredelung des Rohmaterials durch die oben aufgeführten Bearbeitungsverfahren werden die Gläser mehr oder weniger an der Oberfläche beschädigt, wobei dies zum Teil ungewollt geschieht, z.B. bei Kratzern durch unsachgemäße Handhabung, also als durch Transportschäden oder gewollt bei bestimmten Veredelungsverfahren.

Derartige Beschädigungen, Verletzungen oder Oberflächendefekte stellen somit immer eine Gefahr hinsichtlich eines ungewollten Bruchs des Glases dar.

Aus dem Stand der Technik sind im wesentlichen drei grundsätzliche Verfahren zum Erhöhen der Festigkeit von Glas bzw. zum Vermeiden eines Bruchs bei bereits vorhandenen Oberflächendefekten, Verletzungen oder Beschädigungen bekannt. Dabe handelt es sich um das thermische Härten, das chemische Härten und das Beschichten mit organischen Beschichtungsmaterialien oder anorganisch -organischen Hybridmaterialien.

Beim thermischen Härten von Glas, genauer Härten von Glas durch thermisches Vorspannen, wird die Festigkeit durch Erzeugen einer permanenten Oberflächendruckspannung erhöht.

Hierbei werden Gläser in einem Ofen auf eine bestimmte Temperatur erhitzt, bei der sie ihre Form noch erhalten, aber doch so weich werden, dass sie innere Spannungen rasch ausgleichen. Nach einer definierten Verweilzeit werden sie dann schnell abgekühlt.

Aufgrund unterschiedlicher Kühlraten erstarren die Außenzonen unter Kontraktion vor den noch weichen inneren Zonen. Während der weiteren Abkühlung erfolgt im Inneren eine relativ zu den Außenbereichen höhere Schwindung des Volumens, wodurch nun in den Oberflächen und Randbereichen der Werkstücke eine Druckspannung und im Inneren eine Zugspannung entsteht.

Das Spannungsprofil über die Glasdicke weist einen parabelförmigen Verlauf auf. Die Zug- und Druckspannungen müssen im Gleichgewicht sein, d. h. die Oberflächendruckspannung ist vom Betrag her doppelt so groß wie Zugspannung im Inneren der Glasscheibe.

Die so vorgespannten bzw. gehärteten Gläser bezeichnet man als Einscheiben-Sicherheitsglas, oder auch abgekürzt ESG.

Aufgrund der Belastungen durch thermisch induzierte Spannungen, auch während des Vorspannprozesses, ist mindestens ein vorheriges Besäumen der rohen Schnittkante erforderlich. Die an einer naturbelassenen Schnittkante vorhandenen Risse wären einfach zu groß und würden durch die auftretenden Spannungen zum Weiterlaufen gebracht. Durch das Besäumen werden die großen Risse vom Schneiden und Brechen weggeschliffen.

Das ihrerseits durch das Besäumen entstandene Risssystem ist von seiner Abmessung her unkritisch.

Bei der Nachbearbeitung von ESG besteht jedoch ein erhöhtes Bruchrisiko. Deshalb dürfen Vollvorgespannte oder Teilvorgespannte Gläser nicht mehr geschnitten, gesägt, gebohrt, kanten- oder oberflächenbearbeitet werden (z. B. durch Sandstrahlen oder Säureätzung), da ein erhöhtes Bruchrisiko gegeben ist oder das Glas sofort zerstört werden kann. Nach dem Vorspannen gesägte, geschnittene, angebohrte, kanten- oder oberflächenbearbeitete (z. B. durch Sandstrahlen oder Säureätzung) Glasarten sind nicht normkonform.

Die obige Formulierung ist in der neuen DIN EN 1863-1:2012-02 enthalten. In dieser Norm ist ausdrücklich enthalten, dass diese nachträglich bearbeiteten Gläser nicht mehr dieser Norm entsprechen.

Das Bruchrisiko entsteht durch den verfahrenstypischen Materialabtrag, wodurch das Spannungsprofil der Glasscheibe aus dem Gleichgewicht gebracht wird.

Durch das Abtragen der Glasoberfläche wird der Druckspannungsbereich geschwächt. Zusätzlich hinterlassen die oben angeführten Verfahren eine typische, mit Rissen durchsetzte, Bruchflächentopographie.

Die Eindringtiefe, vom Abtrag plus induzierter Risslänge, ist entscheidend für das anschließende Bruchverhalten. Wird z. B. die Zugspannungszone erreicht kommt es unweigerlich zum Spontanbruch des Werkstücks und zwar noch innerhalb der Bearbeitungsmaschine.

Das Positive daran ist, dass diese Scheiben nicht mehr ausgeliefert werden und damit nachträglich kein Schaden entstehen kann.

Besonders gefährlich wird es, wenn die Werkstücke die Nachbearbeitung vermeintlich schadlos überstehen, aber anschließend das Zusammenspiel von innerer Werkstückvorspannung, den von außen wirkenden Kräften und induzierten Rissen zu einem unterkritischen Risswachstum führt. Dieser Mechanismus wird, mit an Sicherheit grenzenden Wahrscheinlichkeit, zur vorzeitigen Ermüdung und dem damit verbundenen Spontanbruch führen.

Der Zeitpunkt des Bauteilversagens ist nicht im Voraus bestimmbar.

Aus diesem Grund ist die Nachbehandlung wie oben beschrieben nicht zulässig.

Beim chemische Härten, das vorzugsweise bei Gläsern angewendet wird, bei entsprechend glasierten Keramiken aber ebenfalls vorgenommen werden kann, macht von einem ähnlichen Effekt Gebrauch. Hierbei wird der zu härtende Glaskörper unterhalb der Schmelztemperatur gewöhnlich in eine Salzschmelze von z.B. KNO₃ getaucht, sodass die im Glasnetzwerk befindlichen kleineren Na-Ionen im Randbereich des Glases gegen größere K-lonen ausgetauscht werden. Dieser gezielte lonenaustausch führt bereits bei der Einlagerung der K-lonen zu einer Expansion der Randschicht mit entsprechenden Druckspannungen, die beim Abkühlen von Salzbadtemperatur wegen der unterschiedlichen Kontraktion von Rand und Kern noch gesteigert werden.

Die Anwendungsmöglichkeiten dieses Verfahrens sind jedoch durch die begrenzte Eindringtiefe der Kaliumionen beschränkt. Ferner unterliegen chemisch gehärtete Gläser hinsichtlich einer nachträglichen Bearbeitung aus vergleichbaren Gründen grundsätzlich den gleichen Beschränkungen wie oben für thermisch gehärtete Gläser beschrieben.

Zur Lösung dieser Probleme sind gemäß den Stand der Technik nur Systeme bekannt, die einen begrenzt haltbaren Schutz des Glases bilden können und nur für vereinzelt auftretende, geometrisch einfache Glasoberflächen angewandt werden können. Ferner lassen sich hierdurch in der Regel nur große Fehlstellen beseitigen, bzw. verbessern.

Aus der Automobilbranche ist beispielsweise bekannt, dass in Risse von zum Beispiel Windschutzscheiben an einem weiteren Ausbreiten gehindert werden, in dem ein Harz mittels Vacuum induziert wird, welches nachfolgend mit UV Licht ausgehärtet wird. Die Risse werden somit mit dem Einsatz eines Riss zusammenklebenden organischen Harzes vor dem "weiterlaufen" gehindert.

Weiterhin ist es im Stand der Technik bekannt, dass bereits gehärtete und dann sandgestrahlte Gläser beschichtet werden.

Diese werden zum Beispiel mit organischen Beschichtungsmaterialien, oder anorganischorganischen Hybridpolymeren beschichtet. Diese Beschichtungen werden in der Regel thermisch, bei Raumtemperatur oder durch UV Licht ausgehärtet. Auch können diese Beschichtungsmaterialien nicht vor dem Härteprozess aufgetragen werden, da die organischen und oder hybriden Beschichtungsmaterialien während des Härteprozesses ihre Wirkung verlieren, und in keinster Weise die durch den Strahlvorgang dem Glas zugefügten Schwächungen, überbrücken und dauerhaft reparieren können.

Schliesslich ist bekannt, dass durch das Feinbearbeiten der Glaskanten z. B. durch Schleifen oder noch besser, durch das auf Hochglanz Auspolieren der Glaskanten und Glasoberflächen, die Belastungsfähigkeit der Gläser erheblich gesteigert wird. Diese Steigerung der Festigkeit beruht, wie bereits weiter oben erläutert, auf der Tatsache, dass Risse, Oberflächendefekte und Beschädigungen oder Verletzungen der Oberfläche in ihrer Tiefe verringert oder entfernt werden. Wie bereits erläutert stellt dies aufgrund des Abtragens der Oberflächenschicht aber ein Problem bei gehärteten Gläsern dar.

Da Gläser häufig einer mechanischen Nachbearbeitung unterliegen, wie zum Beispiel dem Bohren von Löchern zum Befestigen von Scharnieren für Glastüren, Senkbohrungen bei Gläsern um die Beschläge zu Befestigen, Fräsen von Druchsprechöffnungen, Fräsen von Rand- und Eckausschnitten, Gravieren der Oberfläche, Lasern, Sandstrahlen, oder dem Schleifen von Kanten von Architekturgläsern, technischen Gläsern, optischen Gläsern usw., besteht der Nachteil, dass auch bei diesen Bearbeitungsgängen die Glasoberfläche gestresst wird und miskroskopisch kleine Veränderungen der Oberfläche, und Risse entstehen.

Hierbei kann, wie bereits eingehend erwähnt, die Schwächung der gesamten Oberfläche durch z. B. Risse, Absplitterungen usw. zur Zerstörung des Glases bereits weit vor Erreichen seiner eigentlich zulässigen Belastbarkeit führen, wobei dies sowohl für Flächen als auch für Kanten des bearbeiteten Glases gilt.

Es ist daher Aufgabe der vorliegenden Erfindung die aus dem Stand der Technik bekannten Nachteile zumindest zu vermindern oder möglichst zu vermeiden.

In der nachfolgenden Beschreibung der Erfindung wird der Ausdruck "Oberflächendefekt" bzw. dessen Plural zur Bezeichnung von sämtlichen hierin beschriebenen Beschädigungen, Verletzungen oder Fehlstellen von Glasoberflächen verwendet.

### Beschreibung der Erfindung

Die dieser Erfindung zugrunde liegende Aufgabe wird durch ein gehärtetes Glas gemäss Anspruch 1 gelöst. Vorteilhafte Ausgestaltungen sind Gegenstand der abhängigen Ansprüche.

Die vorliegende Erfindung wird nachfolgend unter Bezugnahme auf die Figuren näher erläutert. Es zeigen:
- Figur 1:: eine schematische Darstellung der Stabilisierung der erfindungsgemäss verwendeten Nanopartikel;
- Figur 2:: eine schematische Darstellung des Härteprozesses;
- Figur 3:: eine schematische Darstellung der Struktur eines Glases mit den erfindungsgemäss verwendeten Nanopartikel vor und nach dem Härten.

Basierend auf dem Befund, dass die Festigkeit von Glas aufgrund von Oberflächendefekten, Beschädigungen und Verletzungen etwa um einen Faktor 100 unter der theoretisch zu erwartenden liegt, wurde ein Verfahren entwickelt, bei dem diese Oberflächendefekte ausgefüllt und teilweise oder vollständig entfernt werden. Hierzu werden SiO₂- und/oder Kieselsäurenanopartikel, die eine äussere Schicht aus Polysiloxanen aufweisen, auf die Glasoberfläche aufgebracht und die organischen Reste der Polysiloxane werde durch anschliessendes Härten weitestgehend oder vollständig entfernt. Im Ergebnis wird dabei ein Glas mit rein anorganischer Oberfläche erhalten, das eine überraschend hohe Beständigkeit gegenüber sauren, alkalischen, pH-neutralen, wässrigen Medien und organischen Lösungsmittel aufweist.

Ferner ist die anorganische Oberfläche sehr beständig gegenüber abrasive Medien und mechanischen Verschleiß. Gleiches gilt für UV Beständigkeit. Insgesamt verfügt das erfindungsgemässe Glas über eine erhöhte Festigkeit.

In einer besonderen Ausführungsform der vorliegenden Erfindung werden neben den SiO₂-und/oder Kieselsäurenanopartikeln weiterhin entsprechende Nanopartikel von Oxiden von einem oder mehreren Elementen, ausgewählt aus der Gruppe, bestehend aus Zr, AI, Ti, B, Mg, Ca, Ba, K, Li, Na und Pb, aufgebracht, wobei diese Nanopartikel nicht notwendigerweise Polysiloxane an ihrer Oberfläche aufweisen müssen, d.h. sie müssen nicht notwendiger Weise mit Polysiloxanen modifiziert sein. Ihr Anteil ist im Vergleich zu den SiO₂- und/oder Kieselsäurenanopartikeln gering, allgemein im Bereich von etwa 0,5 bis etwa 10 Gew.-%, bezogen auf den Anteil an SiO₂- und/oder Kieselsäurenanopartikeln, und es kommt auch ohne äussere Schicht von Polysiloxanen zum Einbau dieser Nanopartikel in das Netzwerk des Glases.

Die Zugabe von einem oder mehreren der vorgenannten Elemente ermöglicht vorteilhafter Weise eine weitere Erhöhung der Kratzfestigkeit der Oberfläche und auch eine Steigerung der Festigkeit des Glases.

Allgemein sind die organischen Reste der Polysiloxane von unverzweigten oder verzweigten C₁-C₁₈-Alkylresten, insbesondere von Octadecyl-Resten gebildet oder von den entsprechenden Alkoxyverbindungen. Diese organischen Reste sind geeignet die Nanopartikel sterisch zu stabilisieren während sie sich unter den nachfolgend näher beschriebenen Verfahrensbedingungen sehr gut abspalten lassen. Octadecyl-Reste sind daher bevorzugt. Es können aber auch Siloxane bzw. Polysiloxane mit unterschiedlichen Resten eingesetzt werden.

Bei der Herstellung des erfindungsgemässen Glases wird von einem herkömmlich hergestellten Glas ausgegangen, insbesondere von sogenanntem Floatglas. Dieses wird zunächst mit den SiO₂-und/oder Kieselsäurenanopartikeln, die eine äusseren Schicht aus Polysiloxanen aufweisen, beschichtet. Wegen der vergleichsweise einfachen Handhabbarkeit und Prozessführung ist dabei bevorzugt, wenn die Nanopartikel in Lösung oder in Suspension vorliegen. Wegen der leichten Entfernbarkeit der Lösungsmittel werden hierfür allgemein Wasser bzw. wässrige und/oder alkoholische Lösungsmittel verwendet.

Die SiO₂- und/oder Kieselsäurenanopartikel mit einer äusseren Schicht aus Polysiloxanen enthaltende Lösung oder Suspension wird dann unter Druck oder unter Vakuum auf die Glasoberfläche und in die Oberflächendefekte, Beschädigungen, Verletzungen, Risse und dergleichen auf- bzw. eingebracht.

Die Verfahrensweise zum Aufbringen kann sehr flexibel und entsprechend der vorhandenen apparativen Ausstattung gewählt werden und erfolgt, u.a. in Abhängigkeit von der Form des zu härtenden Glases, beispielsweise durch Sprühen, Tauchen, Walzen, Drucken, Auftragen mit einem Tropfengeber und dergleichen.

Bei dem Aufbringen unter Druck erfolgt zunächst das Aufbringen und nachfolgend das Ausüben von Druck, bevorzugt durch Polieren der Glasoberfläche, wobei die Nanopartikel in die Oberflächendefekte, Risse, Fehlstellen und dergleichen eingearbeitet werden. Hierbei ist es wiederum bevorzugt, das Polieren so lange durchzuführen, bis das Lösungsmittel entfernt ist.

Gleichzeitig kann hierdurch eventuell vorhandenes, überschüssiges Material entfernt werden.

Beim Aufbringen unter Vakuum wird zunächst ein Vakuum angelegt und anschliessend die beschriebenen Nanopartikel enthaltende Lösung oder Suspension aufgetragen. Unter der Wirkung des Vakuums bewegen sich die Nanopartikel in sämtliche Oberflächendefekte, Risse, Fehlstellen und dergleichen. Hierbei ist es bevorzugt das Vakuum so lange aufrecht zu erhalten, bis das Lösungsmittel möglichst vollständig entfernt ist. Es ist ebenfalls bevorzugt nachfolgend und vor dem abschliessenden Härten die so behandelte Glasoberfläche zu polieren um beispielsweise etwaig nicht vollständig gefüllte Oberflächendefekte, Risse, Fehlstellen und dergleichen noch aufzufüllen und/oder überschüssiges Material zu entfernen.

Optional kann das Aufbringen der Nanopartikel enthaltenden Lösung und gegebenenfalls ein nachfolgendes Polieren ein oder mehrere Male wiederholt werden, insbesondere ein, zwei oder drei Mal. Diese Verfahrensweise ist besonders vorteilhaft, da Oberflächendefekte hierdurch besonders zuverlässig ausgefüllt werden und somit das Endprodukt qualitativ verbessert wird.

Das sich an das Aufbringen anschliessende Härten erfolgt allgemein bei einer Temperatur im Bereich von 280 bis 850 °C, insbesondere im Bereich von 600 bis 720 °C. Hierbei ist wesentlich, dass das Härten für das vollständigen Entfernen der organischen Reste der Polysiloxane für eine ausreichende Dauer und bei einer ausreichenden Temperatur erfolgt und zumindest oberflächlich die Erweichungstemperatur des zu härtenden Glases für eine ausreichende Dauer zum Verbinden der Nanopartikel mit dem Glas-Substrat erreicht wird. Die genauen Werte hierfür ergeben sich für den Fachmann unter Berücksichtigung u.a. von der Dicke des Glases und der Art der organischen Reste und werden im Einzelfall experimentell ermittelt.

Unter Berücksichtigung sämtlicher Faktoren wurde gefunden, dass das Härten vorteilhafter Weise und besonders wirtschaftlich in einem Temperaturbereich von 600 bis 720 °C durchgeführt werden kann, da in diesem Temperaturbereich die Geschwindigkeit der Abspaltung der organischen Reste des Polysiloxans und Einbindung der Nanopartikel in das Netzwerk des Glases bereits ausreichend hoch ist und die Verweildauer bei dieser Temperatur ausreichend kurz gewählt werden kann. Es wird ein Material oder Produkt erhalten, bei dem die organischen Reste vollständig entfernt sind und das folglich von rein anorganischer Zusammensetzung ist.

Nach Abkühlen kann das fertige Produkt entnommen und wie üblich verwendet werden.

Obwohl dem Fachmann das Herstellen von mit Polysiloxanen modifizierten Nanopartikeln, insbesondere oxidischen Nanopartikeln, grundsätzlich geläufig ist, wird deren Herstellung nachfolgend zum besseren Verständnis allgemein am Beispiel von Alkylsilanen als Ausgangsverbindungen beschrieben. Diese Umsetzungen sind entsprechend mit Alkoxysilanen durchführbar.

Zur Herstellung von Polysiloxanen sind Polymerisationsreaktionen notwendig um aus niedermolekularen Monomeren Polymere herstellen zu können. Durch zwei Verfahrensschritte werden die Monomere zu Polysiloxane verarbeitet.

Der erste Schritt, um Silane in Polysiloxane überführen zu können, ist die Hydrolyse. Aufgrund der hohen Reaktionsfähigkeit reagieren Siliziumbindungen mit Wasser zu Organosilanolen. Die Abgangsgruppe wird also durch die Hydroxogruppe, OH, ersetzt. Die bei der Hydrolyse der Silane freiwendende HX hat eine beschleunigende Wirkung auf die Kondensation. Des Weiteren verläuft diese Reaktion umso schneller, je mehr OH-Gruppen an einem Siliziumatom vorhanden sind.

Wenn die Kohlenwasserstoffreste mit R bezeichnet werden, dann gilt für die Hydrolyse der Silane folgende Reaktionsgleichung:

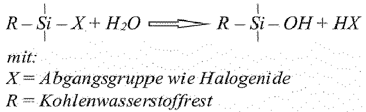

Die anschließende Reaktion ist die Polykondensation. Hierbei gebildete Organosilanole neigen mehr oder weniger zur spontanen Kondensation. Die Neigung der Silanole zu spontaner Kondensation hängt von ihrem molekularen Bau sowie von den Hydrolysebedingungen ab. Die Kondensationsneigung der Silanole ist umso geringer je kleiner die Zahl der OH-Gruppen ist, die an das Si-Atom gebunden sind. Die Silanolmoleküle können mit weiteren Silanolmolekülen spontan unter Abspaltung von Wasser reagieren. Als Produkt wird auf jeden Fall ein Polysiloxan erhalten.

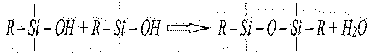

### Ausführungsbeispiele

### 1. Synthese der Beschichtungslösung:

### Lösung 1:

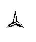 10 g 3-Glycidylpropyltrimethoxysilan, kommerziell z.B. erhältlich unter der Bezeichnung Glymo (Dynasylan, Evonik)
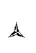 5 g 2,2,4 Trimethylpentan, (Sigma Aldrich)

Diese Lösung wird vor der weiteren Verarbeitung zunächst ca. 2 h gerührt

### Lösung 2:

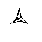 15 g 2-Aminoethyl-3-Aminopropyltrimethoxysilan, kommerziell z.B. erhältlich unter der Bezeichnung Damo (Dynasylan, Evonik)
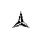 80 g dest. Wasser (Zimmerer Werk)
   - 1 g Salzsäure (37%) (Brenntag)

Diese Lösung wird vor der weiteren Verarbeitung zunächst ca. 1 h gerührt.

Nachfolgend werden Lösung 1 und 2 in einem Verhältnis von 1:1 gemischt und ca. 4 h gerührt. Es bilden sich Nanopartikel.

Wenn zwei Partikel aufeinandertreffen, so können sie auf Grund der wirkenden Adhäsionskräfte Dimere bilden. Bei einem Zusammenstoß können sie zusammenfließen und es wird ein Materialaustausch ermöglicht. Da die Nanopartikel, die aus zwei Lösungen hergestellt werden, instabil sind und es im Laufe der Zeit zu einem Wachstum der Partikel kommt, müssen sie mit einer Hülle aus zweidimensional vernetzten Monomeren stabilisiert werden. Polyorganosiloxane, wie beispielsweise Octadecyltrichlorsilan, sind als Verkapselungsmaterial besonders gut geeignet.

Wie bereits allgemein beschrieben ist der erste Schritt ist die Hydrolyse. Aufgrund der hohen Reaktionsfähigkeit der Chlor-Siliziumbindungen reagiert Octadecyltrichlorsilan mit Wasser zu Organosilanolen unter hydrolytischer Abspaltung des Chlors. Das Chlor wird also durch die Hydroxogruppe, OH, ersetzt. Die bei der Hydrolyse der Chlorsilane freiwendende Salzsäure hat eine beschleunigende Wirkung auf die Kondensation. Des Weiteren verläuft diese Reaktion umso schneller, je mehr OH-Gruppen an einem Siliziumatom vorhanden sind:

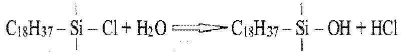

Die anschließende Reaktion ist die Polykondensation. Hierbei gebildete Organosilanole neigen mehr oder weniger zur spontanen Kondensation. Die Neigung der Silanole zu spontaner Kondensation hängt von ihrem molekularen Bau sowie von den Hydrolysebedingungen ab. Die Kondensationsneigung der Silanole ist umso geringer je kleiner die Zahl der OH-Gruppen ist, die an das Si-Atom gebunden sind. Die Silanolmoleküle können mit weiteren Silanolmolekülen spontan unter Abspaltung von Wasser reagieren. Als Produkt wird jeden Fall ein zweidimensioanles Netzwerk erhalten:

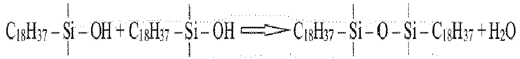

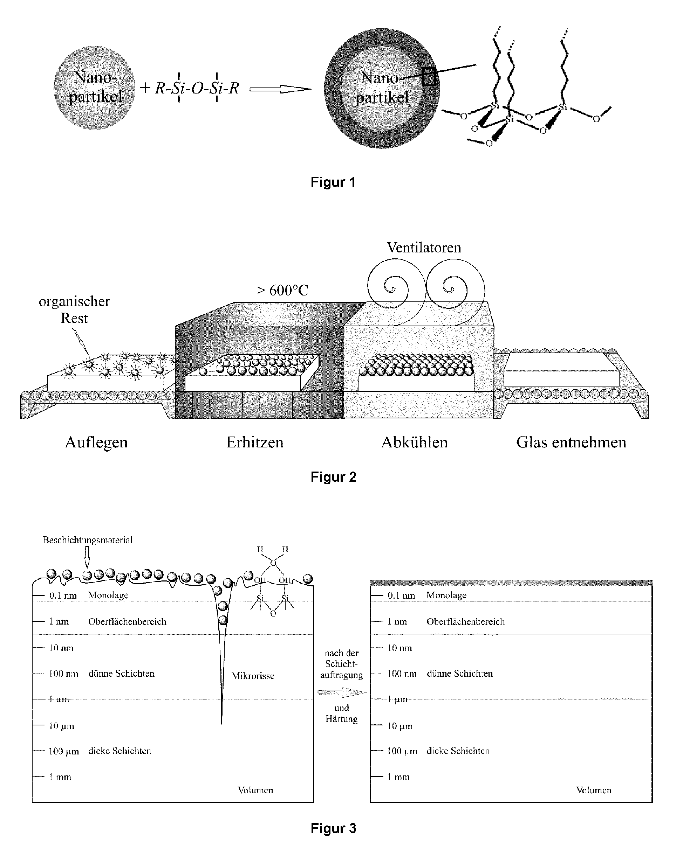

Figur 1 zeigt schematisch den nächsten Schritt, bei dem die Polysiloxane (R = Kohlenwasserstoffrest C₁₈H₃₇) mit Nanopartikeln versetzt werden. Durch sterische Stabilisierung kann die Oberfläche der Nanopartikel über eine Adsorption, eine kovalente oder ionische Bindung modifiziert werden.

### 2. Beschichten von Floatglas

Figur 2 zeigt ein Ausführungsbeispiel des erfindungsgemässen Verfahrens. Dabei wird mit einem computergesteuerten Roboter sowohl das Auftragen des die beschreibenen Nanopartikel enthaltenden Beschichtungsmaterials als auch das anschließende Polieren der Scheiben durchgeführt. Nach dem Verdampfen des Lösungsmittels erfolgt ein thermisches Härten für eine definierten Verweilzeit, proportional zur Glasdicke und Glasart bei 600 bis 720 °C. Durch den Härteprozess werden die organischen Reste beseitigt und man erreicht ein Material mit rein anorganischer Zusammensetzung, und keramischer bzw. glasartiger Oberflächenreaktion, mit Atombindung, bei dem Oberflächendefekte und/oder Verletzungen zumindest in ihrer Ausdehnung verringert oder vollständig beseitigt sind.

Das wie in den Ausführungsbeispielen erhaltene, gehärtete Glas in Form von Glasscheiben wurde einem Beständigkeitstests gegen Säuren, Laugen, Reinigungsmitteln und Feuchte und Abrieb unterzogen. Ferner wurde dieses Glas hinsichtlich seiner Biegzugfestigkeit untersucht.

### Betsändigkeit gegen verschiedene Medien:

Nach dem Härten und Abkühlen wurden die beschichteten Glasscheiben 24 Stunden in den entsprechenden in der nachfolgenden Tabelle angegebenen Medien gelagert und nach einem Tag optisch bewertet, ob die entsprechenden Medien die Eigenschaften der beschichteten Glasscheiben beeinflussen.

| **Testzweck (Beständigkeit gegenüber)** | **Beeinflussung der Oberfläche** |
|---|---|
| Säuren | Nein |
| Laugen | Nein |
| Wasser | Nein |
| Badreiniger von Antikalk | Nein |
| Hygiene Reiniger von Dan Klorix | Ja |
| Bad Reiniger von Biff | Nein |
| Bad Reiniger von Sagrotan | Nein |
| Kraft Universal Reiniger von Domestos | Nein |
| Rohrreiniger von Denk mit | Ja |
| Bad Spray von Meister Propper | Nein |
| Bad Reiniger von Denk mit | Nein |
| Kraftreiniger Multi Fett von Cillit Bang | Nein |
| Essigreiniger von Frosch | Nein |
| Kraftreiniger, Tiefenreiniger und Schimmel von Cillit Bang | Nein |
| Sanitärreiniger von Ecolab Into XL | Nein |
| Hygienereiniger von Sagrotan | Nein |
| Glasreiniger von Denk mit | Nein |
| Glasreiniger von Frosch Spiritus | Nein |
| Hygiene Reiniger von Dan Klorix | Nein |
| Glas- und Flächenreiniger von Kiss | Nein |
| Wischpflege-Hochkonzentrat von ECOLAB GlossXpress plus | Nein |
| Glasreiniger von Israel | Nein |
| alkoholischer Desinfektionsmittel von Bode Bacillol 25 | Nein |
| Spülmitteln von Ajax Fabuloso | Nein |
| Kalkreiniger von ECOLAB Energy Into | Nein |
| Glasreiniger von ECOLAB Clinil | Nein |
| Geräteentkalker von Grass Happer GH 130 | Nein |
| Sanitärreiniger von ECOLAB Into | Nein |
| Kalk- und Schmutzreiniger von Cillit Bang | Nein |
| Glasreiniger von Ja | Nein |
| Badreiniger von Ja | Nein |
| Schimmelentferner von Biff | Nein |
| saurer Sanitärreiniger von ECOLAB Oasis | Nein |
| Kalkreiniger von Sanit Duschblitz 2000 | Nein |

Ein leichter Angriff konnte nur beim Rohrreiniger beobachtet werden, dieser greift die anorganische glasartige Matrix an. Dieses Ergebnis entspricht den Erwartungen, da Rohrreiniger neben sehr stark ätzende, alkalische Substanzen auch Tenside und Natriumhypochlorit enthalten.

Zusammengefasst kann gesagt werden, dass saure, alkalische, pH-neutrale, wässrige Medien und organische Lösungsmittel die Beschichtung nicht beschädigen.

Ferner ist die anorganische Oberfläche sehr beständig gegenüber abrasiven Medien und mechanischem Verschleiß. Gleiches gilt für UV Beständigkeit.

### Biegezugfestigkeit:

Die Biegezugfestigkeit von sandgestrahltem, und errfindungsgemäss beschichtetem und thermisch vorgespanntem Einscheibensicherheitsglas wurde untersucht. Dafür wurden Probekörper unterschiedlicher Dicke aus Floatglas mit den Massen 1100 x 360 mm hergestellt. Die Dicke betrug 3,9 bzw. 7,8 mm.

Innerhalb der Glasstärken wurden die Probekörper aus einem Bandmaß (3,21 m x 6,0 m) gefertigt. Somit wurde sichergestellt, dass die Vorprodukte aus einer Charge und von einem Hersteller stammen.

Die Kanten der Probekörper wurden einheitlich Bearbeitet.

Die anschließenden Bearbeitungen variierten ausschließlich in der Bearbeitungsreihenfolge. Die zur Bearbeitung verwendeten Anlagen wurden nicht verändert.

Die Biege-Bruch-Apparatur wurde vom Materialprüfungsanstalt Darmstadt zertifiziert und zuletzt am 07.02.2012 kalibriert.

Um ein Aussagefähiges Messergebnis zu erzielen wurde für jede Bearbeitungsreihenfolge eine Losgrösse von 10 Stück gewählt. Die Probekörper wurden nach den entsprechenden Bearbeitungsprozessen einem Biege-Bruch-Test unterzogen und die Messergebnisse in der Auswertung protokolliert.

Anschließend werden die durchschnittlichen Messwerte der entsprechenden Lose verglichen. Wie erwartet konnten deutliche Unterschiede im Bezug auf die Biegezugfestigkeit der einzelnen Probekörper festgestellt werden.

Unter Anwendung des erfindungsgemässen Verfahrens ist eine Steigerung der Biegezugfestigkeit von sandgestrahlten, beschichteten und anschließend vorgespannten Gläsern, im Vergleich zu sandgestrahlten und vorgespannten Gläsern, von ca. 1% - 4,5% möglich. Aus den durchgeführten Versuchen ergibt sich hierbei eine Abhängig von der Glasdicke.

Im Vergleich der nach dem Härten, sandgestrahlten Gläser mit dem erfindungsgemässen Verfahren ist eine Steigerung von ca. 17% - 27% zu beobachten. Das Sandstrahlen nach dem Vorspannprozess ist die am Markt häufigsten angewandte Veredelungsvariante und steht somit im Mittelpunkt des durchgeführten Vergleichs.

Die Ergebnisse dieser Untersuchungen sind in der nachfolgenden Tabelle wiedergegeben und bedürfen keiner weiteren Erläuterung:

| 39mm | | | | | | | | | | | | | | | |
|---|---|---|---|---|---|---|---|---|---|---|---|---|---|---|---|
| Bearbeitungsschritte Reihenfolge | | | | Bearbeitungsschritte Reihenfolge | | | | Bearbeitungsschritte Reihenfolge | | | | Bearbeitungsschritte Reihenfolge | | | |
| 1 | 2 | 3 | 4 | 1 | 2 | 3 | 4 | 1 | 2 | 3 | 4 | 1 | 2 | 3 | 4 |
| Sandstrahlen nein | Beschichten nein | Harten ja | Sandstrahlen nein | Sandstrahlen ja | Beschichten ja | Harten ja | Sandstrahlen nein | Sandstrahlen ja | Beschichten nein | Harten ja | Sandstrahlen nein | Sandstrahlen nein | Beschichten nein | Harten ja | Sandstrahlen ja |
| Glas ID Nr | [N] | [Mpa] | | Glas ID Nr | [N] | [Mpa] | | Glas ID Nr | [N] | [Mpa] | | Glas ID Nr | [N] | [Mpa] | |
| 29 | 808 | 181 81 | | 5 | 780 | 175 96 | | 18 | 805 | 181 22 | | 37 | 666 | 150 76 | |
| 23 | 849 | 190 86 | | 6 | 834 | 18758 | | 17 | 807 | 181 66 | | 38 | 637 | 14440 | |
| 24 | 766 | 172 67 | | 7 | 775 | 174 65 | | 19 | 787 | 177 28 | | 36 | 671 | 151 86 | |
| 25 | 758 | 17092 | | 8 | 807 | 181 66 | | 20 | 756 | 17048 | | 34 | 656 | 148 57 | |
| 26 | 758 | 17092 | | 9 | 810 | 18232 | | 12 | 758 | 17092 | | 32 | 674 | 15251 | |
| 28 | 786 | 175 95 | | 10 | | | | 13 | 679 | 153 61 | | 35 | 659 | 149 23 | |
| 27 | 840 | 188 89 | | 1 | 755 | 17026 | | 11 | 772 | 173 99 | | 31 | 674 | 15251 | |
| 22 | 825 | 185 60 | | 2 | 733 | 165 44 | | 14 | 770 | 173 55 | | 33 | 666 | 150 76 | |
| 21 | 859 | 193 06 | | 3 | 772 | 173 99 | | 15 | 770 | 173 55 | | | | | |
| | | | | 4 | 767 | 17289 | | 16 | 782 | 176 18 | | | | | |
| Summe | 7249 | 163068 | | Summe | 7033 | 158475 | | Summe | 7686 | 173244 | | Summe | 5303 | 1200 6 | |
| Durchschnitt | 805 44 | 181 187 | | Durchschnitt | 781 44 | 17608 | | Durchschnitt | 76860 | 173244 | | Durchschnitt | 66288 | 150075 | |

| 78mm | | | | | | | | | | | | | | | |
|---|---|---|---|---|---|---|---|---|---|---|---|---|---|---|---|
| Bearbeitungsschritte Reihenfolge | | | | Bearbeitungsschritte Reihenfolge | | | | Bearbeitungsschritte Reihenfolge | | | | Bearbeitungsschritte Reihenfolge | | | |
| 1 | 2 | 3 | 4 | 1 | 2 | 3 | 4 | 1 | 2 | 3 | 4 | 1 | 2 | 3 | 4 |
| Sandstrahlen nein | Beschichten nein | Harten ja | Sandstrahlen nein | Sandstrahlen ja | Beschichten ja | Harten ja | Sandstrahlen nein | Sandstrahlen ja | Beschichten nein | Harten ja | Sandstrahlen nein | Sandstrahlen nein | Beschichten nein | Harten ja | Sandstrahlen ja |
| Glas ID Nr | [N] | [Mpa] | | Glas ID Nr | [N] | [Mpa] | | Glas ID Nr | [N] | [Mpa] | | Glas ID Nr | [N] | [Mpa] | |
| 67 | 3688 | 204 46 | | 47 | 3465 | 19224 | | 60 | 3248 | 18035 | | 79 | 2728 | 151 86 | |
| 69 | 3379 | 187 53 | | 48 | 3515 | 194 98 | | 59 | 3312 | 183 83 | | 80 | 2754 | 153 29 | |
| 68 | 3836 | 212 57 | | 45 | 3421 | 189 83 | | 58 | 3495 | 193 88 | | 76 | 2764 | 153 83 | |
| 70 | 3121 | 173 39 | | 49 | 3497 | 193 99 | | 51 | 3299 | 183 15 | | 75 | 2796 | 155 59 | |
| 66 | 3570 | 197 99 | | 46 | 3547 | 196 73 | | 52 | 3186 | 176 96 | | 78 | 2711 | 15093 | |
| 65 | 3131 | 173 94 | | 50 | 3353 | 186 10 | | 53 | 3356 | 186 27 | | 72 | 2674 | 148 90 | |
| 64 | 3373 | 187 20 | | 44 | 3591 | 199 14 | | 54 | 3327 | 184 68 | | 74 | 2584 | 143 97 | |
| 63 | 3460 | 191 97 | | 43 | Spontanbruch | beim Handling | | 55 | 3193 | 177 34 | | 77 | 2729 | 151 92 | |
| 62 | 3195 | 177 45 | | 42 | 3349 | 185 89 | | 56 | 3271 | 181 61 | | 71 | 2749 | 153 01 | |
| 61 | 3352 | 186 05 | | 41 | 3463 | 192 13 | | 57 | 3282 | 18221 | | 73 | 2693 | 149 94 | |
| Summe | 34105 | 189255 | | Summe | 31201 | 1731 03 | | Summe | 3296 90 | 32969 | 1830 28 | Summe | 27182 | 1513 24 | |
| Durchschnitt | 3410 50 | 189 255 | | Durchschnitt | 3466 78 | 19234 | | Durchschnitt | 183 028 | | | Durchschnitt | 2718 20 | 151324 | |

Zusammenfassend ist somit festzustellen, dass mit dem erfindungsgemässen Verfahren sich nachweislich sandgestrahlte, beschichtete und thermisch vorgespannte Gläser produzieren lassen, welche normkonform gefertigt, und aufgrund der positiven Beeinflussung der Oberflächendefekte, belastbarer sind. Es hat sich zudem überraschender Weise gezeigt, dass die so hergestellten Gläser weitaus weniger empfindlich gegen Anschmutzungen sind und somit eine eingebaute Anti-Fingerprint-Ausrüstung aufweisen.

Eine mögliche Begründung hierfür ist in Figur 3 dargestellt. Figur 3 zeigt, wiederum in schematischer Darstellung, ein Glas mit aufgebrachten Nanopartikeln vor und nach dem Härten. Neben dem Beheben von Oberflächendefekten wird die Oberfläche durch das erfindungsgemässe Verfahren zu einem gewissen Grad geglättet.

Es ist zu beachten, dass eine Gemeinsamkeit bei allen unbeschichteten Glasoberflächen darin liegt, dass sie ein flaches Wellenmuster mit unterschiedlichen Höhen aufweisen. Hinzu kommt, dass sich Risse in oder an der Oberfläche des Glases bilden können. Bei weiterer Belastung kann es zu einem Fortschreiten des Risses kommen. Um das Wachstum oder Fortschreiten des Risses zu behindern bzw. zu stoppen, wird ein erfindungsgemäss ein Beschichtungsmaterial verwendet, welches mit Silicatgläsern reagiert und wenige Mikrometer dünne Filme auf Substraten ausbilden kann, die unter hohen Temperaturen verfestigt werden.

Jede unbeschichtete Glasfläche ist kratzempfindlich. Es kann in der Regel davon ausgegangen werden, dass eine poröse und rauhe Struktur meist eine schlechtere Kratzfestigkeit aufweist als ein dichtes sehr glattes System. Der Einbau von Kieselsäuren, welche zu Siloxanen umgewandelt werden, schaffen glatte Oberflächen, und führen somit zu einer Verbesserung der Ritzhärte. Bereits die Zugabe geringer Mengen zur Beschichtungslösung führt einerseits zu einer Glättung, andererseits auch zu einer Härtung der Oberfläche.

Bei weiterer Erhöhung der Kieselsäuremenge führt es zu einer mechanisch extrem stabilen, kratzfesten Schicht.

Dies liegt an den guten glasbildenden Eigenschaften des Siliciums, aber auch durch gezielte Auswahl und dem Einbau von z.B. Zr, Al, Ti, B, Mg, Ca und Pb und weiteren Metallatomen, kann die Kratzfestigkeit vorzugsweise weiter erhöht werden.

Durch den Einbau der Kieselsäure kann eine vollständigere Vernetzung der entstandenen Siloxane erfolgen. Ebenso liefert die Zugabe von Kieselsäure ein härtungssteigernden Effekt auf die Antireflexschicht.

## Patentansprüche

1. Gehärtetes Glas, erhältlich durch Aufbringen von SiO₂- und/oder Kieselsäurenanopartikeln, die eine äusseren Schicht aus Polysiloxanen aufweisen, auf die Glasoberfläche und anschliessendem Entfernen der organischen Reste der Polysiloxane durch Härten.

2. Gehärtetes Glas nach Anspruch 1, **dadurch gekennzeichnet, dass** neben den SiO₂-und/oder Kieselsäurenanopartikeln weiterhin entsprechende Nanopartikel von Oxiden von einem oder mehreren Elementen, ausgewählt aus der Gruppe, bestehend aus Zr, Al, Ti, B, Mg, Ca, Ba, Li, K, Na und Pb, aufgebracht werden.

3. Gehärtetes Glas nach Anspruch 1 oder 2, **dadurch gekennzeichnet, dass** die organischen Reste der Polysiloxane von unverzweigten oder verzweigten C₁-C₁₈-Alkylresten, insbesondere von Octadecyl-Resten gebildet sind.

4. Gehärtetes Glas nach einem der Ansprüche 1 bis 3, **dadurch gekennzeichnet, dass** das Härten bei einer Temperatur im Bereich von 280 bis 850 °C erfolgt, insbesondere im Bereich von 600 bis 720 °C.

5. Gehärtetes Glas nach einem der vorhergehenden Ansprüche, **dadurch gekennzeichnet, dass** die Nanopartikel mit einer äusseren Schicht aus Polysiloxanen mittels Druck oder mittels Vakuum auf die Glasoberfläche und in vorhandene Oberflächendefekte eingebracht werden.

6. Gehärtetes Glas nach einem der vorhergehenden Ansprüche, **dadurch gekennzeichnet, dass** die Glasoberfläche nach dem Auftragen der Nanopartikel mit einer äusseren Schicht aus Polysiloxanen und vor dem Härten poliert wird.

7. Gehärtetes Glas nach Anspruch 5 oder 6, **dadurch gekennzeichnet, dass** das Aufbringen der Nanopartikel und ggf. das Polieren ein oder mehrere Male wiederholt wird, insbesondere ein, zwei oder drei Mal.

8. Verwendung eines gehärteten Glases nach einem der vorhergehenden Ansprüche als Architekturglas, Automobilglas, Geräteglas, optisches Glas, Spezialglas, Hohlglas, Laborglas und/oder Möbelglas.
